# EUROPÄISCHE PATENTANMELDUNG

(11) **EP 1 030 502 A2**
(43) Veröffentlichungstag der Anmeldung: **23.08.2000**
(21) Anmeldenummer: 00102751.5
(22) Anmeldetag: 10.02.2000
(51) Int. Cl.: H04M 3/24

(54) **Verfahren und Testvorrichtung zur Durchführung eines Funktionstests an einer Telekommunikationsanlage**

(30) Priorität: 19.02.1999 DE 19906936
(71) Anmelder: ROBERT BOSCH GMBH, 70442 Stuttgart (DE)
(72) Erfinder: Waleska, Josef, 55130 Mainz (DE); Schmidt, Heinz, 61184 Karben (DE); Secker, Ingbert, 55270 Klein-Winternheim (DE)

(57) **Zusammenfassung**

Es wird ein Verfahren und eine Testvorrichtung zur Durchführung eines Funktionstests an einer Telekommunikationsanlage (10), insbesondere Nebenstellenanlage vorgeschlagen, die sich für das regressive Testen aller Leistungsmerkmale von Teilnehmern einer Telekommunikationsanlage eignen. Das Verfahren und die Testvorrichtung ermöglicht die Simulation bzw. Nachbildung von spontan agierenden Telekommunikationsteilnehmern. Solange sich Funktionsinformationen und Testinformationen nicht verändern ist die Testdurchführung unabhängig von Signalen, die zwischen den Telekommunikationsendgeräten und der Telekommunikationsanlage ausgetauscht werden.

## Beschreibung

### Stand der Technik

Die Erfindung geht aus von einem Verfahren nach der Gattung des Hauptanspruchs und von einer Testvorrichtung nach der Gattung des nebengeordneten Anspruchs 15.

Ein Verfahren zur Durchführung eines Funktionstests an einer Telekommunikationsanlage ist in dem Produkt "Pores" der Firma Alcatel realisiert. Hierbei wird eine Testvorrichtung an eine Nebenstellenanlage, die verschiedene Funktionen ausführt, angeschlossen, wobei die Nebenstellenanlage Signale sendet und empfängt und wobei die Testvorrichtung die von der Nebenstellenlage gesendeten und empfangenen Signale mit vorgegebenen Signalen vergleicht. Eine, auch geringfügige, Abweichung der von der Nebenstellenanlage gesendeten und empfangenen Signale von den vorgegebenen Signalen, hervorgerufen beispielsweise durch eine geringfügige Änderung des Protokolls der Signale, durch neue Software oder dergleichen, erkennt die Testvorrichtung als eine fehlerhafte Durchführung des Funktionstests.

### Vorteile der Erfindung

Das erfindungsgemäße Verfahren mit den Merkmalen des Hauptanspruchs und die erfindungsgemäße Testvorrichtung mit den Merkmalen des nebengeordneten Anspruchs 15 haben demgegenüber den Vorteil, daß die von der Nebenstellenanlage gesendeten oder empfangenen Signale lediglich zur Bestimmung von Betriebsarten der Telekommunikationsanlage bzw. von Betriebsarten von an die Telekommunikationsanlage angeschlossenen Telekommunikationsendgeräten verwendet werden. Wenn die Telekommunikationsanlage bei der Durchführung von Funktionstests eine vorgegebene Folge von Betriebsarten durchläuft, ergibt sich dadurch selbst bei einer Veränderung, beispielsweise des Protokolls der Signale oder dergleichen, ein positives Testergebnis, für den Fall daß die vorgegebenen Betriebsarten korrekt durchlaufen wurden. Der Test wird somit nicht auf der Ebene der von der Nebenstellenanlage gesendeten und empfangenen Signale durchgeführt, sondern auf einer höheren Ebene, beispielsweise Funktionsebene, Anwendungsebene oder dergleichen. Eine Veränderung eines Sende/Empfangsprotokolls der Nebenstellenanlage auf einer Protokollebene unterhalb der zu testenden Protokollebene führt damit bei korrekter Durchführung des Funktionstests auf der zu testenden Funktionsebene zu einem positiven Testergebnis. Dadurch kann der Funktionstest der Nebenstellenanlage kundenorientiert durchgeführt werden.

Durch die in den Unteransprüchen aufgeführten Maßnahmen sind vorteilhafte Weiterbildungen und Verbesserungen des im Hauptanspruch angegebenen Verfahrens und der im nebengeordneten Anspruch 15 angegebenen Testvorrichtung möglich.

Besonders vorteilhaft ist, daß zur Durchführung des Soll-Ist-Vergleichs erste Referenzinformationen in einem ersten Testgerät vorliegen und/oder von einem ersten Testgerät empfangen werden. Dadurch kann durch Vergleich der von der Telekommunikationszentrale gesendeten und empfangenen Signale mit den ersten Referenzinformationen eine Beurteilung des Erfolges des Funktionstests durchgeführt werden. Diese Beurteilung des Erfolgs des Funktionstests kann daher auch in dem ersten Testgerät durchgeführt werden.

Weiterhin ist vorteilhaft, daß die Ergebnisse des Soll-Ist-Vergleichs als erste Protokollierungsinformationen in dem ersten Testgerät gespeichert und/oder von dem ersten Testgerät weiterverarbeitet, insbesondere ausgesendet, werden. Dadurch ist es möglich, die Ergebnisse des Funktionstests im Anschluß an den Funktionstest vom Testgerät auszulesen und zu verwenden und/oder vom ersten Testgerät einer zentralen Verarbeitung, insbesondere einem weiteren Testgerät oder dergleichen, zuzuführen.

Weiterhin ist es von Vorteil, ein zweites Testgerät analog dem ersten Testgerät an die Telekommunikationsanlage anzuschließen, wobei auf ein vorgegebenes Initialisierungssignal hin das erste und das zweite Testgerät synchronisiert werden und eine vorgegebene Abfolge von ersten und zweiten Betriebsarten durchlaufen werden. Dadurch ist es möglich, nicht nur Funktionalitäten des Betriebs zwischen einer Telekommunikationsanlage und einem Endgerät zu simulieren und zu testen, sondern es ist möglich, das Zusammenspiel der Telekommunikationsanlage mit mehreren Endgeräten zu simulieren und zu testen. Dies trägt dazu bei, daß der Funktionstest der Telekommmunikationsanlage einschließlich der Telekommunikationsendgeräte realitätsnäher und kundenorientierter durchgeführt werden kann.

Weiterhin ist es von Vorteil, daß das Initialisierungssignal von beliebigen der miteinander verbundenen Anlagen bzw. Geräten ausgesandt werden kann. Dies ermöglicht es, verschiedene Testszenarien zu durchlaufen, wobei beispielsweise in einem ersten Testszenario das Initialisierungssignal von dem ersten Testgerät aus erfolgt und in einem zweiten Testszenario das Initialisierungssignal von der Telekommunikationsanlage aus erfolgt. Dieses Verhalten trägt zu einer praxisgerechten und kundenorientierten Durchführung der Funktionstests einer Telekommunikationsanlage und der an sie angeschlossenen Telekommunikationsendgeräten bei.

Es ist weiterhin von Vorteil, daß die Abfolge von ersten Betriebsarten und/oder das Initialisierungssignal als erste Testinformationen in einem ersten Speicher und daß die Abfolge von zweiten Betriebsarten und/oder das Initialisierungssignal als zweite Testinformationen in einem zweiten Speicher gespeichert sind. Dadurch ist es möglich, die Abfolge von ersten und zweiten Betriebsarten von zum Zweck eines Funktionstests zusammengeschlossenen Geräten und Anlagen zu wiederholen und im Falle des Auftretens von Fehlern die Fehler reproduzierbar zu machen, so daß eine systematische Fehlerbehebung durchführbar ist.

Weiterhin ist es von Vorteil, daß die ersten Funktionsinformationen, die ersten Referenzinformationen, die ersten Protokollierungsinformationen und/oder die ersten Testinformationen zentral gespeichert und verarbeitet werden. Dadurch ist es möglich, die Durchführung des Funktionstests, insbesondere durch Veränderung und Ergänzung einzelner Informationsarten, zentral zu steuern.

Weiterhin ist es von Vorteil, daß das erste Testgerät eine erste Wiedergabeeinheit, insbesondere ein Display, umfaßt, wobei durch die erste Wiedergabeeinheit entsprechend den ersten Betriebsarten erste Wiedergabeinformationen, insbesondere alphanumerische Zeichen, wiedergegeben werden und wobei die ersten Funktionsinformationen den ersten Wiedergabeinformationen zumindest teilweise entsprechen. Die Wiedergabeinformationen entsprechen damit im wesentlichen dem, was z.B. auf einer Wiedergabeeinheit eines Telekommunikationsendgerätes, insbesondere ein Display oder dergleichen, zur Illustration seiner Betriebsart dargestellt wird. Wenn die ersten Funktionsinformationen den ersten Wiedergabeinformationen zumindest teilweise entsprechen, führt der Funktionstest der Telekommunikationsanlage, der die ersten Funktionsinformationen überprüft, im wesentlichen zu einer Überprüfung der ersten Wiedergabeinformationen. Dies trägt dazu bei, daß tiefere Schichten des Kommunikationsprotokolls zwischen der Telekommunikationsanlage und den Endgeräten nicht mitgetestet werden und daß somit Änderungen auf solchen Protokollebenen, beispielsweise Änderungen des Signalisierungsprotokolls, durchgeführt werden können, ohne daß der Funktionstest geändert werden muß.

Es ist weiterhin von Vorteil, wenn das zweite Testgerät analog zur ersten Wiedergabeeinheit des ersten Testgerätes eine zweite Wiedergabeeinheit umfaßt, wobei durch die zweite Wiedergabeeinheit entsprechend den zweiten Betriebsarten zweite Wiedergabeinformationen wiedergegeben werden und wobei die zweiten Funktionsinformationen den zweiten Wiedergabeinformationen zumindest teilweise entsprechen.

Es ist weiterhin von Vorteil, daß das erste Testgerät eine erste Eingabeeinheit, insbesondere eine alphanumerische Tastatur, umfaßt, wobei durch die erste Eingabeeinheit entsprechend den ersten Betriebsarten erste Eingabeinformationen, insbesondere alphanumerische Zeichen, eingegeben werden und wobei die ersten Testinformationen den ersten Eingabeinformationen zumindest teilweise entsprechen. Es ist weiterhin von Vorteil, wenn das zweite Testgerät analog zur ersten Eingabeeinheit des ersten Testgerätes eine zweite Eingabeeinheit umfaßt, wobei entsprechend der zweiten Betriebsarten zweite Eingabeinformationen eingegeben werden und wobei die zweiten Testinformationen den zweiten Eingabeinformationen zumindest teilweise entsprechen. Dadurch kann eine manuelle Durchführung des Funktionstests und insbesondere der Aufbau eines Testdurchlaufes einfach durchgeführt werden. Dies trägt weiterhin zu einer größeren Kundenorientierung und Realitätsnähe des Funktionstests bei.

Weiterhin ist es von Vorteil, daß das erste Testgerät eine erste Steuerungseinheit, eine erste Schnittstelle und eine zweite Schnittstelle umfaßt, wobei die erste Steuerungseinheit zum einen über die erste Schnittstelle mit der ersten Wiedergabeeinheit, zum anderen über die zweite Schnittstelle mit der ersten Eingabeeinheit und außerdem mit dem ersten Teilnehmeranschluß verbunden ist, wobei über die erste Schnittstelle lediglich erste Funktionsinformationen, wobei über die zweite Schnittstelle lediglich erste Testinformationen und wobei zwischen der Steuerungseinheit und dem Teilnehmeranschluß der Telekommunikationsanlage lediglich gesendete und empfangene Signale übertragen werden.
Es ist weiterhin von Vorteil, wenn das zweite Testgerät analog zur ersten Steuerungseinheit des ersten Testgerätes eine zweite Steuerungseinheit, analog zur ersten und zweiten Schnittstelle des ersten Testgerätes eine dritte und vierte Schnittstelle und analog zur ersten Wiedergabe- und Eingabeeinheit des ersten Testgerätes eine zweite Wiedergabe- und Eingabeeinheit mit analogen Funktionsweisen aufweist.
Die Durchführung des Funktionstests der Telekommunikationsanlage und des Testgerätes läuft somit analog der Benutzung eines Telekommunikationsendgerätes an der Telekommunikationsanlage, so daß der Funktionstest sehr kundenorientiert durchgeführt werden kann.

Weiterhin ist es von Vorteil, daß dem ersten und/oder dem zweiten Testgerät eine erste bzw. eine zweite Datenverarbeitungsanlage zugeordnet ist. Dadurch kann die Datenverarbeitungsanlage das Telekommunikationsendgerät während eines Funktionstest so steuern, als würde ein Benutzer das Telekommunikationsendgerät bedienen. Dadurch kann der Funktionstest ebenfalls sehr kundenorientiert durchgeführt werden.

Weiterhin ist es von Vorteil, daß die erste Datenverarbeitungsanlage des ersten Testgerätes und die zweite Datenverarbeitung des zweiten Testgerätes in einer dritten Datenverarbeitungsanlage, die Mittel umfaßt, die ersten und zweiten Betriebsarten zu simulieren, zusammengefaßt sind. Die Testvorrichtung kann somit einfacher und kostengünstiger gestaltet werden, weil bestimmte Einrichtungen, beispielsweise Datenverarbeitungseinrichtungen, Speichereinrichtungen, Schnittstellen oder dergleichen, in der zusammengefaßten Testvorrichtung lediglich einmal vorhanden sein müssen.

### Zeichnung

Ausführungsbeispiele der Erfindung sind in der Zeichnung dargestellt und in der nachfolgenden Beschreibung näher erläutert. Es zeigen
Figur 1 eine Telekommunikationsanlage mit einem angeschlossenen ersten, zweiten und dritten Telekommunikationsendgerät,
Figur 2 eine Telekommunikationsanlage mit einem angeschlossenen ersten und zweiten Testgerät und dem angeschlossenen dritten Telekommunikationsendgerät,
Figur 3 eine Telekommunikationsanlage mit einem angeschlossenen dritten Testgerät und dem dritten Telekommunikationsendgerät,
Figur 4 das erste und das zweite Testgerät,
Figur 5 das dritte Testgerät und
Figur 6 eine detailliertere Darstellung des ersten Testgerätes.

### Beschreibung der Ausführungsbeispiele

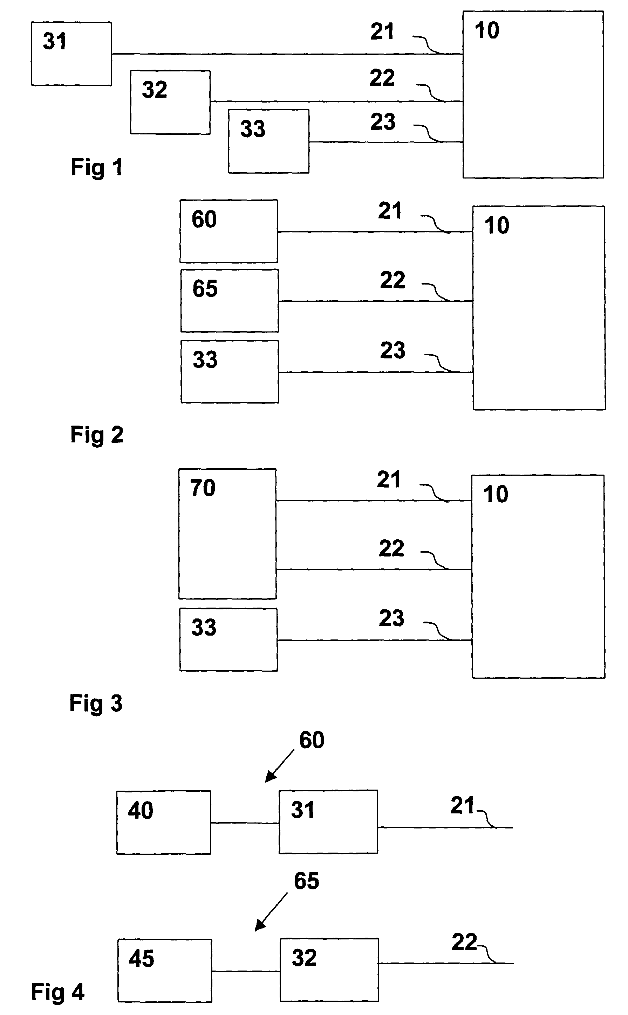

Figur 1 stellt eine Telekommunikationsanlage 10 dar, die einen ersten Teilnehmeranschluß 21, einen zweiten Teilnehmeranschluß 22 und einen dritten Teilnehmeranschluß 23 umfaßt. Die Anzahl von drei Teilnehmeranschlüssen 21,22,23 wurde beispielhaft gewählt und kann erfindungsgemäß in einer konkreten Ausführung in Abhängigkeit der Anzahl von an die Telekommunikationsanlage 10 anzuschließenden Geräten beliebig gewählt werden. Die Telekommunikationsanlage 10 ist in Figur 1 über den ersten Teilnehmeranschluß 21 mit einem ersten Telekommunikationsendgerät 31, über den zweiten Teilnehmeranschluß 22 mit einem zweiten Telekommunikationsendgerät 32 und über den dritten Teilnehmeranschluß 23 mit einem dritten Telekommunikationsendgerät 33 verbunden. Die Anzahl der Telekommunikationsendgeräte 31,32,33 ist ebenso wie die Anzahl der Teilnehmeranschlüsse 21,22,23 beispielhaft gewählt und kann erfindungsgemäß beliebig groß gewählt werden. Die Telekommunikationsendgeräte 31,32,33 können identisch oder verschieden sein. Beispielhaft seien folgende Konfigurationen genannt: 3 identische Telekommunikationsendgeräte 31,32,32, die von drei verschiedenen Teilnehmern zur Sprachkommunikation genutzt werden; ein Telefon und zwei Faxgeräte, wobei die beiden Faxgeräte über die Telekommunikationsanlage 10 Daten übertragen; oder dergleichen.

Figur 2 stellt wiederum die Telekommunikationsanlage 10 mit den Teilnehmeranschlüssesn 21,22,23 dar, wobei an den ersten Teilnehmeranschluß 21 ein erstes Testgerät 60, an dem zweiten Teilnehmeranschluß 22 ein zweites Testgerät 65 und an dem dritten Teilnehmeranschluß 23 das dritte Telekommunikationsendgerät 33 angeschlossen ist. Die Testgeräte 60,65 dienen als Teil einer Testvorrichtung zur Durchführung eines Funktionstests an der Telekommunikationsanlage 10.

Die Telekommunikationsanlage 10 ist erfindungsgemäß eine beliebige Telekommunikationsanlage, insbesondere eine Nebenstellenanlage, eine Vermittlungsstelle oder dergleichen. Beispielhaft wird in den Ausführungsbeispielen die erfindungsgemäße Telekommunikationsanlage 10 vor allem als Nebenstellenanlage beschrieben.
In Figur 2 ist das erste Testgerät 60 in der Lage, Funktionalitäten des ersten Telekommunikationsendgerätes 31 zu simulieren. Dies geschieht dadurch, daß das erste Testgerät 60 in verschiedenen ersten Betriebsarten über den ersten Teilnehmeranschluß 21 mit der Telekommunikationsanlage 10 kommuniziert. Die ersten Betriebsarten, in denen das erste Telekommunikationsendgerät betreibbar ist, und die von dem ersten Testgerät 60 an dem ersten Teilnehmeranschluß 21 simuliert werden können, sind solche Betriebsarten, bei denen sich das erste Telekommunikationsendgerät 31 und das erste Testgerät 60 gleich verhalten. Es ist möglich, daß das erste Telekommunikationsendgerät 31 über die ersten Betriebsarten hinaus weitere Funktionalitäten (Leistungsmerkmale) aufweist, die von dem ersten Testgerät 60 nicht simuliert werden können. Im folgenden soll beispielhaft davon ausgegangen werden, daß das erste Testgerät 60 sämtliche erste Betriebsarten des ersten Telekommunikationsendgerätes 31 simulieren kann, zumal eine von dem ersten Testgerät 60 nicht simulierbare Betriebsart von diesem auch nicht getestet werden kann. Bezüglich der ersten Betriebsarten kommuniziert das erste Testgerät 60 so über den ersten Teilnehmeranschluß 21 mit der Telekommunikationsanlage 10, wie auch das erste Telekommunikationsendgerät 31 über den Teilnehmeranschluß 21 mit der Telekommunikationsanlage 10 kommunizieren würden. Dabei werden erste Signale von der Telekommunikationsanlage 10 gesendet und am ersten Testgerät 60 empfangen und zweite Signale vom ersten Testgerät 60 ausgesendet und am Teilnehmeranschluß 21 empfangen.

Wie das erste Testgerät 60 in Bezug auf das erste Telekommunikationsendgerät 31 kann ein zweites Testgerät 65 als Teil der Testvorrichtung zweite Betriebsarten, die auf dem zweiten Telekommunikationsendgerät 32 betreibbar sind, simulieren und über den zweiten Teilnehmeranschluß 22 mit der Telekommunikationsanlage 10 kommunizieren, wobei dritte Signale von der Telekommunikationsanlage 10 über den zweiten Teilnehmeranschluß 22 an das zweite Testgerät 65 gesendet werden und vierte Signale von dem zweiten Testgerät 65 über den zweiten Teilnehmeranschluß 22 an die Telekommunikationsanlage 10 gesendet werden.

In Figur 3 ist ein drittes Testgerät 70 dargestellt, das an dem ersten und dem zweiten Teilnehmeranschluß 21,22 an die Telekommunikationsanlage 10 angeschlossen ist. Daneben ist wiederum das dritte Telekommunikationsendgerät 33 über den dritten Teilnehmeranschluß 23 mit der Telekommunikationsanlage 10 verbunden. Das dritte Testgerät 70 übernimmt die Funktionalitäten des ersten Testgeräts 60 und des zweiten Testgeräts 65 und entspricht somit einer Testvorrichtung mit zwei Testgeräten 60, 65. Hierbei können insbesondere Datenverarbeitungseinrichtungen, die bei einer Architektur der Testvorrichtung mit einem ersten Testgerät 60 und einem zweiten Testgerät 65 doppelt bereit gehalten werden müßten, eingespart werden und müssen im dritten Testgerät 70 lediglich einmal vorgesehen sein.

Figur 4 stellt das erste Testgerät 60 und das zweite Testgerät 65 in einer erfindungsgemäßen Ausführungsform beispielhaft dar.

In dieser beispielhaften Ausführungsform umfaßt das erste Testgerät 60 eine erste Datenverarbeitungsanlage 40 und das erste Telekommunikationsendgerät 31. Das erste Telekommunikationsendgerät 31 ist dabei einerseits mit der ersten Datenverarbeitungsanlage 40 verbunden und andererseits an den ersten Teilnehmeranschluß 21 angeschlossen. Dieses Ausführungsbeispiel des ersten Testgerätes 60 stellt sicher, daß sich durch das erste Testgerät 60 an dem ersten Teilnehmeranschluß 21 dieselben ersten Betriebsarten simulieren lassen, in denen das erste Telekommunikationsendgerät 31 betreibbar ist. Eine solche Realisierung des ersten Testgerätes 60 ist lediglich eine beispielhafte Ausführungsform desselben, da die ersten Betriebsarten auch beispielsweise durch eine Softwareimplementierung der Funktionalitäten (Leistungsmerkmale) des ersten Telekommunikationsendgerätes 31 auf der ersten Datenverarbeitungsanlage 40 simuliert werden könnten.

Ähnlich dem ersten Testgerät 60 ist das zweite Testgerät 65 in Figur 4 beispielhaft dargestellt, wobei das zweite Testgerät 65 eine zweite Datenverarbeitungsanlage 45 und das zweite Telekommunikationsendgerät 32 umfaßt, wobei das zweite Telekommunikationsendgerät 32 sowohl mit dem zweiten Teilnehmeranschluß 22 als auch mit der zweiten Datenverarbeitungsanlage 45 verbunden ist.

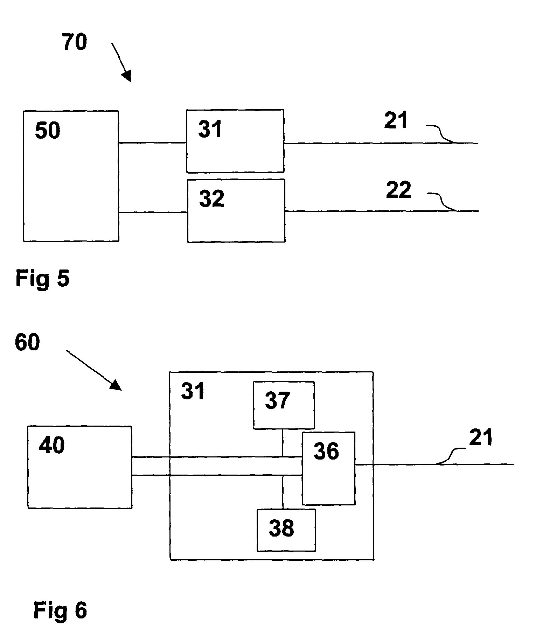

Figur 5 stellt das dritte Testgerät 70 beispielhaft dar. Das dritte Testgerät 70 umfaßt eine dritte Datenverarbeitungsanlage, das erste Telekommunikationsendgerät 31 und das zweite Telekommunikationsendgerät 32. Das erste Telekommunikationsendgerät 31 ist an den ersten Teilnehmeranschluß 21 angeschlossen und mit der dritten Datenverarbeitungsanlage 50 verbunden. Ebenso ist das zweite Telekommunikationsendgerät 32 mit dem zweiten Teilnehmeranschluß 22 und der dritten Datenverarbeitungsanlage 50 verbunden.
Figur 5 stellt eine beispielhafte Ausführungsform des dritten Testgerätes 70 dar, wobei die dritte Datenverarbeitungsanlage 50 die Aufgaben sowohl der ersten Datenverarbeitungsanlage 40 im ersten Testgerät 60 als auch die Aufgaben der zweiten Datenverarbeitungsanlage 45 im zweiten Testgerät 65 übernimmt. Damit entspricht das dritte Testgerät 70 in der beschriebenen Ausführungsform einer Testvorrichtung mit zwei Testgeräten 60, 65.

Figur 6 stellt eine vorteilhafte Ausführungsform des ersten Testgerätes 60 beispielhaft dar. Das erste Testgerät 60 umfaßt in dieser Ausführungsform die erste Datenverarbeitungsanlage 40 und das erste Telekommunikationsendgerät 31, das einerseits mit dem ersten Teilnehmeranschluß 21 und andererseits mit der ersten Datenverarbeitungsanlage 40 verbunden ist. Das erste Telekommunikationsendgerät 31 umfaßt eine erste Steuerungseinheit 36 eine erste Wiedergabeeinheit 37 und eine erste Eingabeeinheit 38. Die erste Steuerungseinheit 36 ist über eine nicht dargestellte erste Schnittstelle mit der ersten Wiedergabeeinheit 37 und über eine nicht dargestellte zweite Schnittstelle mit der ersten Eingabeeinheit 38 verbunden. Weiterhin ist die erste Steuerungseinheit 36 über die erste Schnittstelle und über die zweite Schnittstelle mit der ersten Datenverarbeitungsanlage 40 verbunden.

Das zweite Testgerät 65 ist beispielhaft analog dem ersten Testgerät 60 gemäß der Figur 6 aufgebaut. Das zweite Testgerät 65 umfaßt danach das zweite Telekommunikationsendgerät 32, eine zweite Steuerungseinheit, eine zweite Wiedergabeeinheit eine zweite Eingabeeinheit sowie eine dritte und eine vierte Schnittstelle. Die zweite Steuerungseinheit ist einerseits mit dem zweiten Teilnehmeranschluß 22 und andererseits über die dritte Schnittstelle mit der zweiten Wiedergabeeinheit und der zweiten Datenverarbeitungsanlage 45 und über die vierte Schnittstelle mit der zweiten Eingabeeinheit und der zweiten Datenverarbeitungsanlage 45 verbunden.

Beispielsweise ist für das erste Testgerät 60 die Anbindung der ersten Datenverarbeitungsanlage 40 an die erste und an die zweite Schnittstelle so ausgeführt, daß die Verbindung zwischen der ersten Steuerungseinheit 36 und der ersten Wiedergabeeinheit 37 einerseits und die Verbindung zwischen der ersten Steuerungseinheit 36 und der ersten Eingabeeinheit 38 andererseits nach außen geführt ist, so daß die erste Datenverarbeitungsanlage 40 direkt an die Verbindungen zwischen der ersten Steuerungseinheit 36 und der ersten Wiedergabeeinheit 37 bzw. der ersten Eingabeeinheit 38 angeschlossen werden kann. In dieser beispielhaften Ausführungsform übernimmt die erste Datenverarbeitungsanlage 40 die Funktionen der ersten Wiedergabeeinheit 37 und der ersten Eingabeeinheit 38. Entsprechend dem ersten Testgerät 60 ist beispielsweise für das zweite Testgerät 65 die Anbindung der zweiten Datenverarbeitungsanlage 45 an die dritte und an die vierte Schnittstelle so ausgeführt, daß die zweite Datenverarbeitungsanlage 45 ebenfalls direkt an die Verbindungen zwischen der zweiten Steuerungseinheit einerseits und der zweiten Wiedergabeeinheit bzw. der zweiten Eingabeeinheit andererseits angeschlossen werden kann. In dieser beispielhaften Ausführungsform übernimmt die zweite Datenverarbeitungsanlage 45 die Funktionen der zweiten Wiedergabeeinheit und der zweiten Eingabeeinheit. Die ersten Funktionsinformationen entsprechen den von der ersten Steuerungseinheit 36 über die erste und die zweite Schnittstelle zur ersten Datenverarbeitungsanlage 40 übertragenen Informationen, währenddem die ersten Testinformationen dem von der ersten Datenverarbeitungsanlage 40 über die erste und die zweite Schnittstelle zur Steuerungseinheit 36 übertragenen Informationen entsprechen. Genauso entsprechen die zweiten Funktions- und Testinformationen den zwischen der zweiten Steuerungseinheit und der zweiten Datenverarbeitungsanlage 45 über die dritte und vierte Schnittstelle übertragenen Informationen.

Die zwischen der ersten Steuerungseinheit 36 und der Telekommunikationsanlage 10 für das erste Testgerät 60 auf dem ersten Teilnehmeranschluß 21 übertragenen ersten und zweiten Signale und die zwischen der zweiten Steuerungseinheit und der Telekommunikationsanlage 10 über den zweiten Teilnehmeranschluß 22 ausgetauschten dritten und vierten Signale werden von der ersten Datenverarbeitungsanlage 40 für das erste Testgerät 60 bzw. von der zweiten Datenverarbeitungsanlage 45 für das zweite Testgeräte 65 nur insoweit berücksichtigt, als die ersten, zweiten, dritten oder vierten Signale Funktionsinformationen bzw. Testinformationen an der ersten, der zweiten, der dritten oder der vierten Schnittstelle auslösen oder von ihnen ausgelöst werden.

Erste Funktionsinformationen werden insbesondere von ersten Signalen, die an der ersten Steuerungseinheit 36 von der Telekommunikationsanlage 10 über den ersten Teilnehmeranschluß 21 empfangen werden, ausgelöst und zweite Signale werden insbesondere von ersten Testinformationen ausgelöst, die, beispielsweise an der zweiten Schnittstelle, von der Steuerungseinheit 36 empfangen werden. Dies gilt entsprechend auch für das zweite Testgerät 65, wobei die zweiten Funktionsinformationen insbesondere von den dritten Signalen ausgelöst werden und die vierten Signale von den zweiten Testinformationen ausgelöst werden.

Die erste Datenverarbeitungsanlage 40 umfaßt einen ersten Speicher, worin einerseits die ersten Funktionsinformationen speicherbar sind und andererseits die ersten Referenzinformationen speicherbar sind. Weiterhin umfaßt die erste Datenverarbeitungsanlage 40 eine erste Verarbeitungseinheit, wo die ersten Funktionsinformationen, die insbesondere aus den von der Telekommunikationsanlage 10 über den ersten Teilnehmeranschluß 21 zur ersten Steuerungseinheit 36 gesandten ersten Signalen erzeugt wurden, mit den ersten Referenzinformationen verglichen werden und aus dem Vergleich die ersten Protokollierungsinformationen erzeugt werden.
Die zweite Datenverarbeitungsanlage 45 umfaßt einen zweiten Speicher, worin einerseits die zweiten Funktionsinformationen und andererseits die zweiten Referenzinformationen speicherbar sind. Weiterhin umfaßt die zweite Datenverarbeitungsanlage 40 eine zweite Verarbeitungseinheit, wo die zweiten Funktionsinformationen, die insbesondere aus den von der Telekommunikationsanlage 10 über den zweiten Teilnehmeranschluß 22 zur zweiten Steuerungseinheit gesandten dritten Signalen erzeugt wurden, mit den zweiten Referenzinformationen verglichen werden und aus dem Vergleich die zweiten Protokollierungsinformationen erzeugt werden.
In dem ersten Speicher sind weiterhin die ersten Testinformationen speicherbar, die, zur ersten Steuerungseinheit 36 übertragen, zweite Signale auslösen, die über den ersten Teilnehmeranschluß 21 zur Telekommunikationsanlage 10 übertragen werden und von dort, beispielsweise über den zweiten Teilnehmeranschluß 22, in Form von dritten Signalen zum zweiten Testgerät übertragen und dort in zweite Funktionsinformationen übersetzt werden. Falls in dem zweiten Testgerät 65 mittels der zweiten Referenzinformationen ermittelt wurde, daß die zweiten Funktionsinformationen korrekt sind, wird zur Fortsetzung des Funktionstests aus den, beispielsweise in dem zweiten Speicher abgelegten, zweiten Testinformationen die entsprechende Folgeinformation ermittelt und an die zweite Steuerungseinheit gesendet, welche über den zweiten Teilnehmeranschluß 22 vierte Signale zur Telekommunikationsanlage 10 sendet, die beispielsweise über den ersten Teilnehmeranschluß 21 zur ersten Steuerungseinheit 36 wiederum als erste Signale gesendet werden.

Diese Kommunikation zwischen dem ersten Testgerät 60 und dem zweiten Testgerät 65 erfolgt für die Durchführung eines Funktionstests in der Regel mehrfach, so daß möglichst viele erste und zweite Betriebsarten ausgetestet werden können.

Eine erfindungsgemäße Testvorrichtung umfaßt ein erstes und/oder ein zweites Testgerät 60,65. Weiterhin kann die Testvorrichtung auch das dritte Testgerät 70 umfassen, wobei das erste und das zweite Testgerät 60, 65 im dritten Testgerät integriert ist. Weiterhin ist es jedoch ebenso möglich, daß die Testvorrichtung weitere erste, zweite oder dritte Testgeräte 60, 65, 70 umfaßt.

Die Testgeräte 60,65 und damit auch die Testvorrichtung werden erfindungsgemäß insbesondere mittels Teilnehmeranschlüssen 21,22,23 an die Telekommunikationsanlage 10 angeschlossen. In einer vorteilhaften Ausführungsform werden beispielsweise Personal Computer, also Datenverarbeitungsanlagen, als Testgeräte 60,65, 70 an die Teilnehmeranschlüsse 21,22,23 einer Telekommunikationsanlage 10 anstelle von Telekommunikationsendgeräten 31,32,33 wie beispielsweise Telefonapparate oder dergleichen angeschlossen. Die Personal Computer übernehmen die volle Funktionalität eines Telekommunikationsendgerätes, beispielsweise mittels Simulation, wobei alle anreizbaren Vermittlungsfunktionen eines Telekommunikationsendgerätes über die Personal Computer als Testgeräte 60,65, 70 angestoßen und anschließend auf korrekte Ausführung überprüft werden können.

Erfindungsgemäß werden hierzu Funktionalitäten (Leistungsmerkmale) der Telekommunikationsendgeräte 31,32,33, deren Anzeige sowie Bedienelemente und Displayausgaben auf einem Bildschirm oder dergleichen des Personal Computers als Testgerät 60, 65, 70 bzw. auf einem Bildschirm oder dergleichen der Datenverarbeitungsanlage des Testgerätes 60, 65, 70 abgebildet. Die abgebildeten Funktionen können durch einen Mausklick aktiviert werden und die daraus resultierenden vermittlungstechnischen Reaktionen stehen als entsprechende Bildschirminhalte zur Verfügung. Bei diesen Tests wird das Verhalten des in dem Testgerät 60, 65, 70 nachgebildeten Telekommunikationsendgerätes 31,32,33 und nicht die Inhalte und zeitliche Abfolge des Signalisierungsprotokolls zwischen dem Telekommunikationsendgerät 31,32,33 und der Telekommunikationsanlage 10 bewertet. Beispielsweise werden die einzelnen Anzeigen, bzw. Display- und Bildschirmanzeigen oder dergleichen, eines Verbindungsaufbaus ausschnittsweise erfaßt, als Referenzinformation abgespeichert und während dem Funktionstest einem Soll-lst-Vergleich unterzogen. Das bedeutet, daß der Funktionstest erfolgreich durchgeführt worden ist, wenn beispielsweise die aktuelle Anzeige der zuvor angelegten Referenzinformation entspricht. Das Ergebnis des Vergleichs wird in Form von Protokollierungsinformationen gespeichert.

Zur Initialisierung werden beispielsweise zwei unabhängig voneinander laufende Testgeräte 60, 65 die über Teilnehmeranschlüsse 21,22,23 an die Telekommunikationsanlage 10 angeschlossen sind, durch ein vereinbartes Ereignis, z.B. 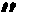 Anruf" synchronisiert und führen danach einen definierten vermittlungstechnischen Vorgang durch, d.h. sie durchlaufen eine Abfolge von Betriebszuständen. Das erste Testgerät 60 durchläuft eine Folge von ersten Betriebszuständen und das zweite Testgerät 65 durchläuft eine Folge von zweiten Betriebszuständen. Dieses Verfahren ermöglicht die Nachbildung des Verhaltens von spontan agierenden Telekommunikationsteilnehmern. Der Vermittlungsvorgang wird wie beim 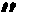 echten" Teilnehmer direkt von einem Teilnehmeranschluß 21,22,23 aus, d.h. von einem Telekommunikationsendgerät 31,32,33 angestoßen. Damit bleibt für die Durchführung des Funktionstests der gesamte Verbindungsaufbau ohne Zwischenschaltung und Fremdeinwirkung. Das Verfahren ermöglicht auch einen Verbindungsaufbau mit mehreren Telekommunikationsendgeräten 31,32,33. Damit erfolgen die Funktionstests aus Kundensicht, sind somit kundenorientiert. Das Verfahren eignet sich für das regressive Testen aller Leistungsmerkmale, d.h. aller Funktionsmerkmale von, beispielsweise digitalen, Teilnehmern und der Vermittlungstechnik einer Telekommunikationsanlage 10, insbesondere einer Nebenstellenanlage. Die Testdurchführung ist unabhängig von APS-Versionen (Anwenderprogramm-Versionen), Telekommunikationsanlagen-Hardware und Telekommunikationsanlagen-Konfiguration, solange die Funktionsinformationen und die Testinformationen beispielsweise den an den Telekommunikationsendgeräten 31,32,33 eingegebenen bzw. ausgegebenen Informationen entsprechen und diese nicht verändert werden.

## Patentansprüche

1. Verfahren zur Durchführung eines Funktionstests an einer Telekommunikationsanlage (10), insbesondere Nebenstellenanlage, wobei die Telekommunikationsanlage (10) einen ersten Teilnehmeranschluß (21), an den ein erstes, in mehreren ersten Betriebsarten betreibbares Telekommunikationsendgerät (31) anschließbar ist, umfaßt, wobei an den ersten Teilnehmeranschluß (21) ein erstes Testgerät (60) angeschlossen wird, dadurch gekennzeichnet, daß das erste Testgerät (60) so steuerbar ist, daß die ersten Betriebsarten simuliert werden, wobei während der Simulation der ersten Betriebsarten durch das erste Testgerät (60) gemäß einem Signalisierungsprotokoll erste Signale am ersten Testgerät (60) empfangen und zweite Signale vom ersten Testgerät (60) ausgesendet werden, wobei die ersten und die zweiten Signale in die ersten Betriebsarten des ersten Telekommunikationsendgerätes (31) übertragen werden, wobei die ersten und zweiten Signale lediglich zur Bestimmung der ersten Betriebsarten des ersten Telekommunikationsendgerätes (31) verwendet werden und wobei die ersten Betriebsarten des ersten Telekommunikationsendgerätes (31) von dem ersten Testgerät (60) als erste Funktionsinformationen gespeichert und/oder weiterverarbeitet, insbesondere gesendet, werden.

2. Verfahren nach Anspruch 1, dadurch gekennzeichnet, daß die ersten Funktionsinformationen einem Soll/Ist-Vergleich zugänglich gemacht werden, wobei das Ergebnis des Soll/Ist-Vergleichs, eine Beurteilung des Erfolgs des Funktionstests zuläßt.

3. Verfahren nach Anspruch 1 oder 2, dadurch gekennzeichnet, daß zur Durchführung des Soll/Ist-Vergleichs erste Referenzinformationen in dem ersten Testgerät (60) vorliegen und/oder von dem ersten Testgerät (60) empfangen werden.

4. Verfahren nach einem der vorhergehenden Ansprüche, dadurch gekennzeichnet, daß die Ergebnisse des Soll/Ist-Vergleichs als erste Protokollierungsinformationen in dem ersten Testgerät (60) gespeichert und/oder von dem ersten Testgerät (60) weiterverarbeitet, insbesondere ausgesendet, werden.

5. Verfahren nach einem der vorhergehenden Ansprüche, dadurch gekennzeichnet, daß die Telekommunikationsanlage (10) einen zweiten Teilnehmeranschluß (22), an den ein zweites, in mehreren zweiten Betriebsarten betreibbares Telekommunikationsendgerät (32) anschließbar ist, umfaßt, wobei ein zweites Testgerät (65) so steuerbar ist, daß die verschiedenen zweiten Betriebsarten simuliert werden, wobei während der Simulation der zweiten Betriebsarten durch das zweite Testgerät (65) gemäß dem Signalisierungsprotokoll dritte Signale am zweiten Testgerät (65) empfangen und vierte Signale vom zweiten Testgerät (65) ausgesendet werden, wobei auf ein vorgegebenes Initialisierungssignal hin das erste und das zweite Testgerät (65) synchronisiert werden und eine vorgegebene Abfolge von ersten und zweiten Betriebsarten durchlaufen werden.

6. Verfahren nach Anspruch 5, dadurch gekennzeichnet, daß das Initialisierungssignal erste, zweite, dritte und/oder vierte Signale umfaßt.

7. Verfahren nach Anspruch 5 oder 6, dadurch gekennzeichnet, daß das Initialisierungssignal von dem ersten Testgerät (60) von dem zweiten Testgerät (65) oder von der Telekommunikationsanlage (10) ausgelöst wird.

8. Verfahren nach einem der Ansprüche 5 bis 7, dadurch gekennzeichnet, daß die Telekommunikationsanlage (10) einen dritten Teilnehmeranschluß (23), an den ein drittes Telekommunikationsendgerät (33) angeschlossen wird, umfaßt und daß das Initialisierungssignal von dem dritten Telekommunikationsendgerät (33) ausgelöst wird.

9. Verfahren nach einem der Ansprüche 5 bis 8, dadurch gekennzeichnet, daß in einem ersten Speicher die Abfolge von ersten Betriebsarten und/oder das Initialisierungssignal als erste Testinformationen gespeichert werden und daß in einem zweiten Speicher die Abfolge von zweiten Betriebsarten und/oder das Initialisierungssignal als zweite Testinformationen gespeichert werden.

10. Verfahren nach Anspruch 9, dadurch gekennzeichnet, daß die ersten Funktionsinformationen, die ersten Referenzinformationen, die ersten Protokollierungsinformationen und/oder die ersten Testinformationen zentral gespeichert und verarbeitet werden.

11. Verfahren nach einem der vorhergehenden Ansprüche, dadurch gekennzeichnet, daß das erste Testgerät (60) eine erste Wiedergabeeinheit (37), insbesondere ein Display, umfaßt, wobei durch die erste Wiedergabeeinheit entsprechend den ersten Betriebsarten erste Wiedergabeinformationen, insbesondere alphanumerische Zeichen, wiedergegeben werden und wobei die ersten Funktionsinformationen den ersten Wiedergabeinformationen zumindest teilweise entsprechen.

12. Verfahren nach Anspruch 11, dadurch gekennzeichnet, daß die ersten Wiedergabeinformationen, insbesondere Displayanzeigen, einer Telekommunikationsverbindung ausschnittsweise erfaßt, als erste Referenzinformationen abgespeichert und während dem Funktionstest einem Soll-Ist-Vergleich unterzogen werden, wobei der Funktionstest erfolgreich durchgeführt ist, wenn die aktuellen ersten Wiedergabeinformationen den Referenzinformationen entsprechen.

13. Verfahren nach einem der vorhergehenden Ansprüche, dadurch gekennzeichnet, daß das erste Testgerät (60) eine erste Eingabeeinheit (38), insbesondere eine alphanumerische Tastatur, umfaßt, wobei durch die erste Eingabeeinheit (38) entsprechend den ersten Betriebsarten erste Eingabeinformationen, insbesondere alphanumerische Zeichen, eingegeben werden und wobei die ersten Testinformationen den ersten Eingabeinformationen zumindest teilweise entsprechen.

14. Verfahren nach Anspruch 11, 12 oder 13, dadurch gekennzeichnet, daß das erste Testgerät (60) eine erste Steuerungseinheit (36), eine erste Schnittstelle und eine zweite Schnittstelle umfaßt, wobei die erste Steuerungseinheit (36)
- über die erste Schnittstelle mit der Wiedergabeeinheit (37)
- über die zweite Schnittstelle mit der Eingabeeinheit (38)
- mit dem ersten Teilnehmeranschluß (21) verbunden ist,
wobei über die erste Schnittstelle lediglich erste Funktionsinformationen, wobei über die zweite Schnittstelle lediglich erste Testinformationen und wobei zwischen der ersten Steuerungseinheit (36) und dem ersten Teilnehmeranschluß (21) lediglich erste und/oder zweite Signale übertragen werden.

15. Testvorrichtung zur Durchführung eines Funktionstests an einer Telekommunikationsanlage (10), insbesondere Nebenstellenanlage, wobei die Testvorrichtung ein erstes Testgerät (60) zum Anschluß an einen ersten Teilnehmeranschluß (21) der Telekommunikationsanlage (10), an den ein erstes, in mehreren ersten Betriebsarten betreibbares Telekommunikationsendgerät (31) anschließbar ist, umfaßt, dadurch gekennzeichnet, daß das erste Testgerät (60) Mittel umfaßt,
- die ersten Betriebsarten zu simulieren,
- während der Simulation der ersten Betriebsarten durch das erste Testgerät erste Signale gemäß einem Signalisierungsprotokoll zu empfangen und zweite Signale zu senden,
- die ersten und die zweiten Signale in die ersten Betriebsarten des ersten Telekommunikationsendgerätes (31) zu übertragen,
- die ersten und die zweiten Signale lediglich zur Bestimmung der ersten Betriebsarten des ersten Telekommunikationsendgerätes (31) zu verwenden,
wobei dem ersten Testgerät (60) eine erste Datenverarbeitungsanlage (40) zugeordnet ist.

16. Testvorrichtung nach Anspruch 15, dadurch gekennzeichnet, daß die Testvorrichtung ein zweites Testgerät (65) zum Anschluß an einen zweiten Teilnehmeranschluß (22) der Telekommunikationsanlage (10), an den ein zweites, in mehreren zweiten Betriebsarten betreibbares Telekommunikationsendgerät (32) anschließbar ist, umfaßt, wobei das zweite Testgerät (65) Mittel umfaßt,
- die zweiten Betriebsarten zu simulieren,
- während der Simulation der zweiten Betriebsarten durch das zweite Testgerät (65) dritte Signale gemäß einem Signalisierungsprotokoll zu empfangen und vierte Signale zu senden,
- auf ein vorgegebenes Initialisierungssignal hin das erste und das zweite Testgerät (60,65) zu synchronisieren und eine vorgegebene Abfolge von ersten und zweiten Betriebszuständen zu durchlaufen,
wobei dem zweiten Testgerät (65) eine zweite Datenverarbeitungsanlage (45) zugeordnet ist.

17. Testvorrichtung nach Anspruch 16, dadurch gekennzeichnet, daß die erste Datenverarbeitungsanlage (40) des ersten Testgerätes (60) und die zweite Datenverarbeitungsanlage (45) des zweiten Testgerätes (65) in einer dritten Datenverarbeitungsanlage (50), die Mittel umfaßt, die ersten und die zweiten Betriebsarten zu simulieren, zusammengefaßt sind.

18. Testvorrichtung nach Anspruch 16, dadurch gekennzeichnet, daß das erste Testgerät (60) sowohl das erste Telekommunikationsendgerät(31) als auch die erste Datenverarbeitungsanlage (40) umfaßt und daß das zweite Testgerät (65) sowohl das zweite Telekommunikationsendgerät (32) als auch eine zweite Datenverarbeitungsanlage (45) umfaßt.

19. Testvorrichtung nach Anspruch 16, dadurch gekennzeichnet, daß die Testvorrichtung das erste Telekommunikationsendgerät (31), das zweite Telekommunikationsendgerät (32) und eine dritte, den beiden Telekommunikationsendgeräten gemeinsame Datenverarbeitungsanlage (50) umfaßt.

20. Testvorrichtung nach Anspruch 18 oder 19, dadurch gekennzeichnet, daß das erste Telekommunikationsendgerät (31) eine erste Steuerungseinheit (36), eine erste Wiedergabeeinheit (37) und eine erste Eingabeeinheit (38) aufweist, wobei die erste Steuerungseinheit (36) über eine erste Schnittstelle mit der ersten Wiedergabeeinheit (37) verbunden ist, wobei die erste Steuerungseinheit (36) über eine zweite Schnittstelle mit der ersten Eingabeeinheit (38) verbunden ist und wobei die erste und/oder die dritte Datenverarbeitungsanlage (40,50) mit dem ersten Telekommunikationsendgerät (31) über die erste und die zweite Schnittstelle verbunden ist.

21. Testvorrichtung nach Anspruch 18, 19 oder 20, dadurch gekennzeichnet, daß das zweite Telekommunikationsendgerät (32) eine zweite Steuerungseinheit, eine zweite Wiedergabeeinheit und eine zweite Eingabeeinheit aufweist, wobei die zweite Steuerungseinheit über eine dritte Schnittstelle mit der zweiten Wiedergabeeinheit verbunden ist, wobei die zweite Steuerungseinheit über eine vierte Schnittstelle mit der zweiten Eingabeeinheit verbunden ist und wobei die zweite und/oder die dritte Datenverarbeitungsanlage (45,50) mit dem zweiten Telekommunikationsendgerät (32) über die dritte und die vierte Schnittstelle verbunden ist.

22. Testvorrichtung nach Anspruch 21, dadurch gekennzeichnet, daß die Testvorrichtung Mittel umfaßt, über die erste Schnittstelle lediglich erste Funktionsinformationen, insbesondere vom ersten und/oder vom zweiten Telekommunikationsendgerät (31, 32) zur ersten und/oder zur dritten Datenverarbeitungsanlage (40,50), zu übertragen.

23. Testvorrichtung nach Anspruch 21, dadurch gekennzeichnet, daß die Testvorrichtung Mittel umfaßt, über die zweite Schnittstelle lediglich Testinformationen, insbesondere von der ersten und/oder von der dritten Datenverarbeitungsanlage (40,50) zum ersten und/oder zum zweiten Telekommunikationsendgerät (31,32), zu übertragen.

24. Testvorrichtung nach einem der Ansprüche 20 bis 23, dadurch gekennzeichnet, daß die erste Steuerungseinheit (36) mit dem ersten Teilnehmeranschluß (21) und/oder die zweite Steuerungseinheit mit dem zweiten Teilnehmeranschluß (22) verbunden ist.

25. Testvorrichtung nach Anspruch 24, dadurch gekennzeichnet, daß erste und/oder zweite Signale lediglich zwischen der ersten Steuerungseinheit (36) und dem ersten Teilnehmeranschluß (21) übertragbar sind.

26. Testvorrichtung nach Anspruch 24, dadurch gekennzeichnet, daß dritte und/oder vierte Signale lediglich zwischen der zweiten Steuerungseinheit und dem zweiten Teilnehmeranschluß (22) übertragbar sind.
